# EUROPEAN PATENT APPLICATION

(11) **EP 2 911 335 A1**
(43) Date of publication of application: **26.08.2015**
(21) Application number: 14156230.6
(22) Date of filing: 21.02.2014
(51) Int. Cl.: H04L 9/32

(54) **Physical uncloneable function based anti-counterfeiting system**

(71) Applicant: The European Union, represented by the European Commission, 1049 Brussels (BE)
(72) Inventor: Baldini, Gianmarco, 21027 Ispra, Varese (IT); Sanchez Martin, Jose Ignacio, 21020 Bardello, Varese (IT); Nai Fovino, Igor, 21040 Castronno, Varese (IT)
(74) Representative: Office Freylinger

(57) **Abstract**

A device for identifying genuine and counterfeited goods using challenge-response pairs (CRP) based on physical unclonable function (PUF), said device comprising one or more antennae for emitting a number of first electromagnetic signals as challenges to a good and for receiving a number of second electromagnetic signals as responses from the good, both challenge and response forming a challenge-response pair for said good, wherein at least one of the antennae is a wideband antenna, a software defined radio (SDR) unit arranged for emitting said first electromagnetic signal(s) as challenge(s) and arranged for receiving said second electromagnetic signal(s) as response(s), a challenge-response pair evaluation unit for analysing said challenge-response pair(s) and to provide a result acknowledging if the good is genuine or counterfeit.

## Description

### Technical field

The present invention relates to a device and method useful in the context of identifying genuine or counterfeited goods on the basis of what is known as Physical(ly) Unclonable Function (PUF).

### Background Art

Counterfeiting of goods is a serious threat to various industries including in particular pharmaceuticals, medical devices and luxury goods. It is to be noted that the threat is not only economical, but may have farther reaching consequences on human and animal health and welfare.

Various anti-counterfeiting solutions have been proposed in the past. They include specific packaging technologies, like holograms, special inks, barcodes, chemical markers, as well as the Radio Frequency Identification (RFID) technology. The general idea of all these anti-counterfeiting techniques is to identify a good of a certain type, preferably however as a unique good different from any other good, even of the same type and even if produced by the same process within the same production facility by the same manufacturer.

One of the more recent approaches relates to the concept of Physical(ly) Unclonable Function (PUF) and its use as an anti-counterfeiting instrument. A PUF can be defined as a function that is embodied within the very physical structure of a good, which function can be easily evaluated, but is difficult to predict. This latter property is supposed to render the good unique and thus unclonable.

The evaluation of a PUF is based on a challenge and a corresponding response, which form the so-called Challenge-Response Pair (CRP). The response to a particular challenge is always the same (albeit within a certain error range due to environmental influences) for a determined good, but is different even from identical(ly produced) goods. If the response to the particular challenge is that expected from the CRP previously determined e.g. by the manufacturer, the good can be positively identified as being genuine or authentic.

However, as a CRP is statically developed by the manufacturer for both the PUF and the reader units, the security of the overall system relies on the assumption that the response cannot be cloned. In fact, although a priory the PUF suggests that it is unclonable, successful cloning has been reported (Katzenbeisser Stefan, et al., "PUFs: Myth, Fact or Busted? A Security Evaluation of Physically Unclonable Functions (PUFs) Cast in Silicon", CHES 2012, 14th International Workshop, Leuven, Belgium. September 9-12, 2012).

Furthermore, the security provided by the concept of PUFs must be based on the unpredictability of responses to new challenges. Again, if the unpredictability of a PUF is not guaranteed, cloning becomes possible, which will make unusable the PUFs already deployed and the physical devices generating the Challenges and evaluating the responses.

Hence, despite the suggestive name, a PUF based anti-counterfeiting method remains subject to cloning attacks, hereby a resilient secure solution cannot be based on the assumption of the unclonability of a certain CRP, but shall exploit the unpredictability of new CRPs for already deployed PUFs, and allow quick recovery and mitigation of clonability breaches in an agile and cost effective way.

### Technical problem

It is therefore an object of the present invention to provide a more robust and flexible method and corresponding devices for allowing to positively or unambiguously identify a good either as genuine or as counterfeited, even if a PUF based identifying CRP has become unusable (because it has been successfully cloned).

### General Description of the Invention

In order to overcome at least part of the above-mentioned problems, the present invention proposes, in a first aspect, a device (also called reader herein) for identifying genuine and counterfeited goods using challenge-response pairs (CRP) based on physical unclonable function (PUF). Said device comprises one or more antennae for emitting a number of first electromagnetic signals as challenges and for receiving a number of second electromagnetic signals as responses, each couple of challenge and corresponding response forming a challenge-response pair. The device further comprises a software defined radio (SDR) unit and at least one of the antennae is a wideband antenna. The wideband antenna can operate in various frequency bands. An example is the SATIMO SH400, which operates in the 0.4 - 6 GHz frequency band. Furthermore, said software defined radio (SDR) unit is arranged for emitting said first electromagnetic signal(s) as challenge(s) and arranged for receiving said second electromagnetic signal(s) as response(s) and a challenge-response pair evaluation unit for analysing said challenge-response pair(s) and to provide a result acknowledging if the good is genuine or counterfeit.

Goods in the context of the invention are so-called PUF enabled (or embedded) goods or PUF equipped goods, i.e. goods which intrinsically integrate a PUF or goods which have been modified to comprise a PUF. Furthermore, the invention focusses on radio frequency (RF) challenge of a PUF. Examples of PUF enabled goods are typically goods comprising a physical microstructure depending on physical factors introduced during manufacture which are unpredictable, such as integrated circuits, e.g. electronic devices in general, computer chips and processors, ..., RFIDs, etc. One example of the application of PUF is to enhance the security of Smart Cards, where the internal memory of the Smart Card can be used for the PUF (for example Smartcards by NXP at www.nxp.com).

In the context of the present invention, a software defined radio (SDR) is a system composed by a radio frequency (RF) front-end with both an analogue-to-digital and a digital-to-analogue converter, as well as a general-purpose processor complemented with a digital signal processor (DSP) or a field programmable gate array (FPGA). The signal processing for radio communication is executed in a general-purpose processor rather than being done in special-purpose hardware. The first major benefit of the use of SDR in comparison to a conventional radio, is that an SDR can receive and transmit in various different radio technologies in different frequencies based solely on the software installed and activated on the SDR (i.e. the waveform). In this way, a device based on SDR technology can be dynamically configured with new waveforms, implementing new wireless standards or new modulation schemes to generate challenges. Hence, the proposed solution allows exploiting the flexibility of SDR technology to improve and strengthen the robustness of PUF technologies. In this way, the potential space of the CRP is significantly enhanced in comparison to special purpose hardware. A second major benefit is when the unclonability of a PUF is breached. Special-purpose hardware devices (e.g. to generate the challenges) already deployed in the market must currently be physically replaced if there is a breach. This may imply significant costs for product recall. A device to generate the challenges and based on SDR technology can be dynamically configured with new waveforms to generate new challenges against the already deployed PUF. These new challenges cannot be replicated by the cloned PUFs. In this way, both the recalls for the PUF based goods and the devices to generate challenges are not required to respond effectively and cost efficiently to the breach.

In a preferred embodiment, the first electromagnetic signal(s) are generated by the PUF in the good on the basis of the challenge generated by the device based on SDR technology. The implementation of the CRP can be based on sophisticated algorithms, which can be based on various parameters, such as different frequencies, modulations, amplitudes, the duration, etc. of the first electromagnetic signal(s) to be produced as an output by the PUF with the purpose to check the authenticity of the good. With the term algorithm we intend a step-by-step finite list of operations, which can be implemented with one complex electromagnetic signal or a set of signals, which collectively produce the CRP. These algorithms, as well as the firmware/software for the software defined radio or any other information needed within the device, in particular for keeping the device up to date, should be easily transferrable into the device, preferably at any time such a transfer is desirable or required (i.e. after the manufacturing of the device). Hence, the device is preferably connectable, be it by wire or wirelessly, to a unit, e.g. a server, capable of providing updated software, algorithms, etc. Advantageously, in an additional embodiment, the device further comprises means for wireless communication with a remote update server for updating the software of the software defined radio and/or programmable PUF algorithms and/or challenge-response pair authentication information. The wireless communication can be of any appropriate standard, such as Bluetooth, wireless Ian (e.g. WiFi), 3G (e.g. UMTS), 4G (e.g. LTE), etc. or even proprietary.

In a particularly preferred embodiment, the device is arranged for a centralised mode, wherein the challenge-response pair evaluation unit delegates (part of) the evaluation of the challenge-response pair(s) to a remote authentication server based on challenge-response pair authentication information stored on said remote authentication server. In such a case, the challenge-response pair authentication information does not need to be downloaded to the device and thus cannot easily be inspected and reverse-engineered by an ill-intentioned user. This way of evaluating the authenticity is thus particularly secure if, of course, the communication between the device and the remote server is kept secure.

Alternatively, the device is arranged for decentralised authentication mode and the challenge-response pair evaluation unit effects the evaluation of the challenge-response pair(s) based on authentication information stored within the device. The advantage of this option is that there is no need for permanent connection, i.e. the device could be used even in places where (wireless) communication with the remote authentication server would be difficult or even impossible.

It is to be noted that both centralised and decentralised modes may combined e.g. for allowing the use of the device even in cases where communication to a remote server is impossible or unreliable or e.g. to keep certain challenge-response pairs within the control of the authentication authority/manufacturer (and to potentially release them for decentralised use only later if need be or if desired).

The device preferably further comprises evaluation notification means (or more simply signalisation means) for notifying the result provided by challenge-response pair evaluation unit. Such signalisation means may be means as simple as a LED, preferably however the signalisation means comprise a display or screen on which a human readable message containing the result of the evaluation can be displayed. It seems clear that any suitable "signalisation means" or even combinations thereof can be used, such as visual, acoustic or vibration signals.

The device is either a "stand-alone" device with all the necessary (and possibly one or more optional) features or it is arranged to be used in connection with a further device providing some of the required or optional features or it may even be completely integrated into another device or apparatus to supplement the latter with the PUF authentication features of the invention. Preferably, the device is operationally connectable to a smartphone such that (part of) the hardware and software of the smartphone can be used e.g. for displaying and/or for wireless communication. As a further preferred alternative, the device is operationally integrated into a smartphone, thereby provided all the usual functions of a smartphone, but supplemented by PUF authentication as described herein.

It is to be noted that the term smartphone as used herein is to be interpreted largely, i.e. as referring to any hand-held mobile communication device with a display, generally but not necessarily a touch sensitive screen, and encompasses mobile (cellular) phones, tablets, laptop/notebook computers, or other mobile devices with appropriate computational power and wireless communication capabilities.

In a further aspect, the invention also provides a method for identifying genuine and counterfeited goods using challenge-response pairs (CRP) based on physical unclonable function (PUF), said method comprising the steps of:
a) emitting a first electromagnetic signal as a challenge to a good, wherein the first electromagnetic signal is produced by a software defined radio (SDR) unit and emitted through a wideband antenna
b) receiving a second electromagnetic signal as a response, wherein said second electromagnetic signal is received by said software defined radio (SDR) unit through a wideband antenna,
   wherein both challenge and response form a challenge-response pair,
c) evaluating said challenge-response pair to determine if the good is genuine or counterfeit, and
d) providing the result of the evaluation of step (c).

As already described above, the first electromagnetic signal(s) are preferably defined by programmable PUF algorithms to be executed by the software defined radio.

In some embodiments of the method, steps (a) to (d) are effected within a single device based on hardware, software and information stored therein, also called decentralised mode.

In alternative embodiments of the method, only steps (a) and (b) are effected within a single device based on hardware, software and information stored therein, whereas step (c) is effected remotely on a remote authentication server and the result of step (d) is transmitted to the device, also called centralised mode herein.

In further embodiments, both centralised and decentralised modes may be combined if desired or necessary as described above.

Hence, in an additional aspect, the invention also concerns a device or a plurality of interconnected (identical or different) devices being arranged for implementing the method described herein.

The invention also concerns a computer program product, having computer executable instructions for causing a programmable device, preferably a device as described herein, optionally connected (or connectable) to further devices, such as a remote authentication server, to execute the method described herein, alone or in combination with said further devices.

A further aspect of the invention is a computer-readable medium, having stored therein/thereon data or information representing instructions executable by a programmed processor, the computer-readable medium comprising instructions for causing a programmable device, preferably a device as described herein, optionally connected (or connectable) to further devices, such as a remote authentication server, to execute the method as described herein, alone or in combination with said further devices.

In a still further aspect, the invention also proposes the use of a device as described herein or the use of a method as described herein for detecting known counterfeited goods and for tracking or tracing such counterfeited goods which can be useful to follow counterfeited goods, to collect evidence on sale channels for legal actions, etc.

### Brief Description of the Drawings

Preferred embodiments of the invention will now be described, by way of example, with reference to the accompanying drawings in which:
Fig. 1 is a schematic representation of a preferred framework of the present invention;
Fig. 2 is a schematic view of an embodiment of a preferred SDR PUF reader.

### Description of Preferred Embodiments

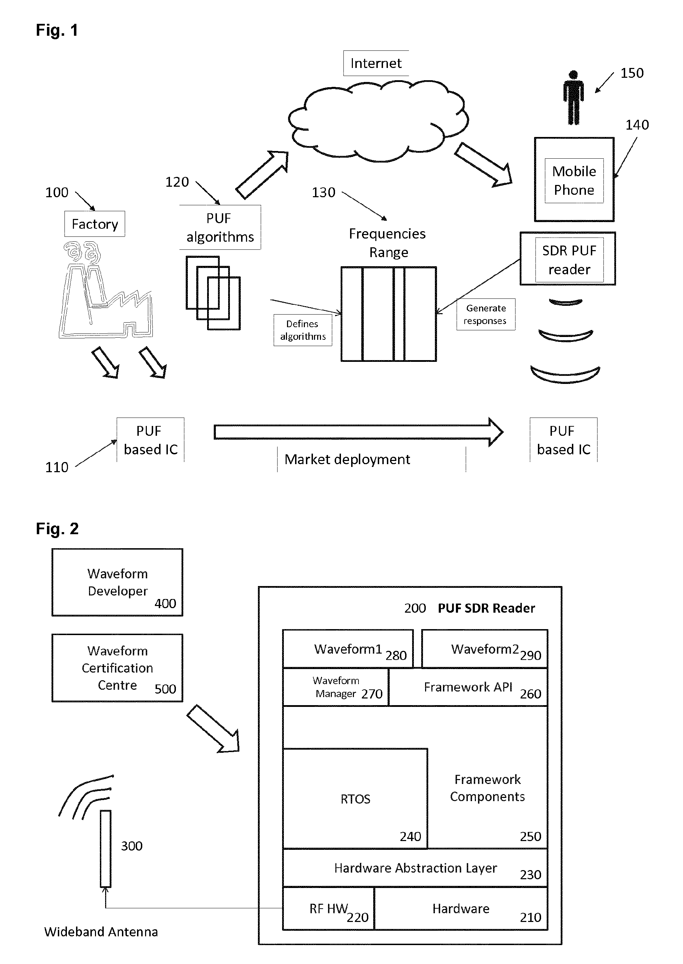

Fig.1 describes an example of the overall framework 10 of a preferred embodiment of the present invention.

The factory 100 of a good, such as a PUF based integrated circuit IC 110, implements a specific PUF in the IC (or in other devices, e.g. RFIDs, etc.). In the goods factory 100, the challenge and response pairs are determined, tested and validated for accuracy. Because SDR PUF readers are used, the algorithms 120 of PUF validation can be implemented at different frequencies 130 to enlarge the space of the challenge-response pairs and to mitigate the risk the PUF could be cloned. A device or reader according to the present invention makes it virtually impossible to clone a good to make it react as if it were genuine, even if some responses to determined challenges could be mimicked, because the material will behave (respond) differently from the genuine good at other frequencies.

The algorithms 120 can be embedded in a waveform to be distributed to the SDR PUF reader 140 through a secure channel. Various techniques and algorithms can be used for the secure distribution of the waveform. A survey of the security threats and the potential techniques to ensure secure download and activation of applications is provided e.g. in Becher, M.; Freiling, F.C.; Hoffmann, J.; Holz, T.; Uellenbeck, S.; Wolf, C., "Mobile Security Catching Up ? Revealing the Nuts and Bolts of the Security of Mobile Devices", Security and Privacy (SP), 2011 IEEE Symposium, vol. no., pp.96-111, 22-25 May 2011.

In some embodiments SDR PUF reader 140 is a dedicated hand-held device integrating among others a SDR. In other embodiments the SDR of the SDR PUF reader 140 can be an additional module to be connected to a smartphone or easily integrated within a smartphone.

Once a user 150 wants to verify that a good is valid, the SDR module e.g. in the smartphone is used to create the challenge and to analyse the response from the PUF embedded or equipped good (e.g., in this example a PUF based IC). The SDR module can generate different challenges and analyse different responses in a short timeframe, based on the computational power of modern smartphones and their capability to process even sophisticated signal processing algorithms.

A SDR based device, such as a SDR based smartphone, can also be used to detect and report to the factory 100 the identification of counterfeit PUF goods. This is an additional advantage of preferred aspects of the present invention. Furthermore, the SDR PUF reader 140 may also be configured to collect statistics on the robustness of a PUF algorithm (e.g., number of false alarms) to further improve the design of the PUF algorithms used.

In case of a successful breach of a PUF algorithm, the following steps can for example be executed to adopt new algorithms for counterfeiting:
1. A counterfeited object or good is detected either by the SDR based PUF reader or by other means. A new algorithm needs to be defined.
2. The factory 100 decides to implement a new PUF algorithm 120 for the new PUF based products 110 and a new PUF implementation. In an alternative scenario, the factory 100 may decide to not implement a new PUF but just create a new challenge/response with different parameters/modulation or different frequencies 130.
3. The new PUF algorithm 120 is distributed to all the PUF readers 140 through a secure downloading as described herein.
4. The new PUF algorithm 120 is activated on the PUF readers 140.

Fig. 2 shows an example of the overall architecture of a preferred PUF SDR reader.

A PUF SDR reader 200 can be implemented using different hardware 210 platforms. The details of the hardware 210 components are hidden behind the hardware abstraction layer 230 (HAL) so that common code for implementing the challenge-response can be used in readers with different hardware 210 implementations. The SDR framework components 250 and Real Time Operating System 240 (RTOS) support the execution of a waveform, which implements specific challenge/responses with the good (equipped with PUF) to be evaluated. It is to be noted that a reader 200 can carry more than one waveform to support compatibility issues, where goods can still use old PUFs of different PUFs.

The architecture preferably supports two modes of operation, centralized or decentralized. In the centralized mode, the SDR reader 200 sends the challenges to the PUF, retrieves the responses and sends them back to the central server through Internet for their authentication. This mode of operation requires permanent connectivity to the Internet (such as with embedded WiFi or 3G/GPRS), but it is very resistant to reverse engineering attempts, since the authentication of the responses do not take place within the SDR reader.

In the decentralized mode, the reader is loaded with the set of waveforms (challenges) and algorithms to authenticate the responses, and it is able to operate autonomously without Internet connectivity. The manufacturer sets a centralized server online where the updates of counterfeiting-detection algorithms (i.e. the SDR challenge-responses authentication algorithms) are periodically published. The Internet connectivity is only required for the update of the challenges and response authentication algorithms, and, eventually, to report to the manufacturer data about a discovered counterfeited object.

The communication between the SDR reader 200 and the central server 500, for both modes of operation, uses a secure channel such as based on SSL (HTTPS) and a public-key infrastructure (PKI) which might either make use of a public set of root certificate authorities (CA) or a private one. The connection to the central server 500 is initiated by the reader device 200, which will periodically poll the remote server 500 to check if updates are available. Two-way SSL is preferably employed for the mutual authentication of the server 500 and the reader device 200. Each reader device preferably contains a SSL client certificate signed, and the root CA of the PKI. The usage of intermediate CAs is preferably supported and even recommended.

In the centralized mode, the above mentioned security system protects the client-server communications used for the reception of challenges and authentication of responses. If a client certificate or a set of certificates are compromised, they can be revoked at the server side and they will no longer be allowed to connect.

In the decentralized mode, the waveform distributed by the server to the readers will be, in addition the two-way secure socket layer (SSL) channel security, signed at the server side by a trusted CA (either directly by the root CA trusted by the reader, or by an intermediate CA of the chain of trust), providing end-to-end authentication. The waveform manager 270 in the PUF SDR reader 200 is responsible for checking the validity of the waveform distributed to the reader. If the signature is valid, the new waveform is installed and activated on the reader. Through the framework 250 and the HAL 230, the waveform will issue new type of challenges to the PUF and it will analyse different type of responses.

In addition to developing new waveforms implementing new challenge/responses in response to a security breach, it is also possible to create a set of challenge/responses aimed at already detected known counterfeited products increasing the robustness of the solution and allowing to track the source of counterfeited products.

In order to cover a wide range of frequencies and allow for the creating of a big variety of challenges and responses, the PUF SDR reader should be equipped with a RF HW 220 (ADC/DAC, amplifiers, filters) and with an antenna 300, which must be able to cover a large range of frequencies: ideally all the frequencies where the challenges and responses operate. An example is the SATIMO SH400, which operates in the 0.4 - 6 GHz frequency band.

To facilitate, the development of the waveforms by the waveform developer, a development kit can be created with the most important "blocks", which can be used to develop the challenge and to analyse the response. For example, some blocks could be the modulation scheme (QAM, QPSK), the frequency, the transmitted power and so on. The new algorithms defined by the PUF manufacturing plant can be composed using existing blocks and/or new blocks.

As described before, a PUF reader 200 can, and it is recommended to carry more than one waveform 280, 290 in order to increase the robustness and allow for the interoperability with old PUFs. If a PUF does not react to a specific waveform, it may be an old model. The reader can deactivate and re-activate an old waveform to test if the PUF is indeed an old model. This is a further feature, which would not be possible with a PUF reader only based on hardware components. In both the centralized and decentralized modes of operation, the model of the PUF being read can be easily fingerprinted by sending several challenges and analysing the responses, in such a way that the authentication based on the responses is performed accordingly to the model being read.

### Legend:

- 10: Overall framework
- 100: Goods factory
- 110: PUF based IC
- 120: PUF algorithms
- 130: Frequencies ranges
- 140: SDR PUF reader (device)
- 150: User
- 20: Overall architecture
- 200: SDR PUF reader (device)
- 210: Hardware
- 220: RF hardware
- 230: Hardware abstraction layer HAL
- 240: Real time operating system RTOS
- 250: Framework components
- 260: Framework application programming interface (API)
- 270: Waveform manager
- 280: Waveform 1
- 290: Waveform 2
- 300: Wideband antenna
- 400: Waveform developer
- 500: Waveform certification centre

## Claims

1. A device for identifying genuine and counterfeited goods using challenge-response pairs (CRP) based on physical unclonable function (PUF), said device comprising:
one or more antennae for emitting a number of first electromagnetic signals as challenges to a good and for receiving a number of second electromagnetic signals as responses from the good, both challenge and response forming a challenge-response pair for said good, wherein at least one of the antennae is a wideband antenna,
a software defined radio (SDR) unit arranged for emitting said first electromagnetic signal(s) as challenge(s) and arranged for receiving said second electromagnetic signal(s) as response(s),
a challenge-response pair evaluation unit for analysing said challenge-response pair(s) and to provide a result acknowledging if the good is genuine or counterfeit.

2. The device according to claim 1, wherein the first electromagnetic signal(s) are defined by programmable PUF algorithms to be executed by the software defined radio.

3. The device according to claim 1 or 2, wherein the device further comprises means for wireless communication with a remote update server for updating the software of the software defined radio and/or programmable PUF algorithms and/or challenge-response pair authentication information.

4. The device according to any one of claims 1 to 3, wherein the device is arranged for centralised use and wherein the challenge-response pair evaluation unit delegates the evaluation of the challenge-response pair(s) to a remote authentication server based on challenge-response pair authentication information stored on said remote authentication server.

5. The device according to any one of claims 1 to 4, wherein the device is arranged for decentralised authentication and wherein the challenge-response pair evaluation unit effects the evaluation of the challenge-response pair(s) based on authentication information stored within the device.

6. The device according to any one of the preceding claims, further comprising signalisation means for notifying the result provided by challenge-response pair evaluation unit, preferably the signalisation means comprise a display or screen.

7. The device according to any one of the preceding claims, wherein the device is operationally connectable to a smartphone or is operationally integrated into a smartphone.

8. A method for identifying genuine and counterfeited goods using challenge-response pairs (CRP) based on physical unclonable function (PUF), said method comprising the steps of:
a) emitting a first electromagnetic signal as a challenge to a good, wherein the first electromagnetic signal is produced by a software defined radio (SDR) unit and emitted through a wideband antenna
b) receiving a second electromagnetic signal as a response, wherein said second electromagnetic signal is received by said software defined radio (SDR) unit through a wideband antenna,
wherein both challenge and response form a challenge-response pair,
c) evaluating said challenge-response pair to determine if the good is genuine or counterfeit, and
d) providing the result of the evaluation of step (c).

9. The method according to claim 8, wherein the first electromagnetic signal(s) are defined by programmable PUF algorithms to be executed by the software defined radio.

10. The method according to claim 8 or 9, wherein steps (a) to (d) are effected within a single device based on hardware, software and information stored therein.

11. The method according to claim 8 or 9, wherein steps (a) and (b) are effected within a single device based on hardware, software and information stored therein, whereas step (c) is effected remotely on a remote authentication server and the result of step (d) is transmitted to the device.

12. A computer program product, having computer executable instructions for causing a programmable device, preferably a device according to any of claims 1 to 7, to execute the method according to any of claims 8 to 11.

13. A computer-readable medium, having stored therein data representing instructions executable by a programmed processor, the computer-readable medium comprising instructions for causing a programmable device, preferably a device according to any of claims 1 to 7, to execute the method according to any of claims 8 to 11.

14. A device or a plurality of interconnected devices being arranged for implementing the method according to any of claims 8 to 11.

15. Use of a device according to claims 1 to 7 or of a method according to claims 8 to 11 for detecting known counterfeited goods and for tracking such counterfeited goods.
